# EUROPEAN PATENT SPECIFICATION

(11) **EP 0 901 239 B1**
(45) Date of publication and mention of the grant of the patent: **11.08.2004**
(21) Application number: 98307055.8
(22) Date of filing: 02.09.1998
(51) Int. Cl.: H04B 7/005, H04B 17/00

(54) **Pilot signal reception level averaging system**
Durchschnittbildungssystem für den Pilotsignalempfangspegel
Système faisant la moyenne des niveaux de réception d'un signal pilote

(30) Priority: 02.09.1997 JP 23726897
(43) Date of publication of application: 10.03.1999
(73) Proprietor: NEC CORPORATION, Tokyo (JP)
(72) Inventor: Furukawa, Hiroshi, Minato-ku, Tokyo (JP)
(74) Representative: W.P. THOMPSON & CO.

(56) References cited:
- GB-A- 2 234 354
- US-A- 5 056 109
- US-A- 5 491 837
- SANTUCCI F ET AL: "Analysis of user membership in cellular networks" THE 8TH IEEE INTERNATIONAL SYMPOSIUM ON PERSONAL, INDOOR AND MOBILE RADIO COMMUNICATIONS, vol. 3, 1 July 1997 (1997-07-01), pages 750-754, XP002173804

## Description

The present invention relates to a cellular mobile radio communication system including base stations that send pilot signals and a mobile station or stations each able to receive the pilot signals and to choose the base station with the strongest pilot signal power from among the received pilot signals. In a particular arrangement to be described by way of example in illustration of the present invention there is a system for averaging the level of a received pilot signal for determining the propagation loss between the base stations and the mobile station.

A previously proposed example of a cellular mobile radio communication system included a number of scattered radio base stations which operated within the same frequency range at the same time. A mobile station normally established a connection with the one of the base stations which provided the minimum propagation loss. The mobile station established communication with the base station using the minimum transmission power by means of transmission power control. The transmission power control minimized interference with any other radio channels and thus enabled an increased number of mobile stations to access the particular base station simultaneously. The base stations transmitted pilot signals to the mobile station all the time. The mobile station estimated the propagation loss from the received pilot signal. The pilot signal served as an index for the transmission power control or for the choice of the base station that the mobile station accessed.

In such an arrangement, the level at which the mobile station received the pilot signals fluctuated due to propagation loss and to a fading component which overlapped the propagation loss. The reception level for the pilot signal with the overlapped fading fluctuation component increased the possibility of an error in the transmission power control when the mobile station performed the transmission power control or chose the base station. Such an error was liable to cause an improper choice of the base station with the minimum propagation loss for the mobile station in question. The propagation loss component was acquired by means of averaging the reception levels at which the pilot signals were received.

Previously proposed arrangements will now be described with reference to Figs. 1 to 4 of the accompanying drawings, in which:-
Fig. 1 is a block schematic diagram for use in describing a previously proposed technique for averaging the levels at which pilot signals are received,
Fig. 2 is a graphical representation of an averaged pilot signal reception level obtained by a previously proposed technique for averaging the levels at which the pilot signals are received,
Fig. 3 is a graphical representation of an averaged pilot signal reception level obtained by a previously proposed technique for averaging the levels at which pilot signals are received when a fading component in the level of a received pilot signal fluctuates relatively sluggishly, and
Fig. 4 is a graphical representation of an averaged pilot signal reception level obtained by a previously proposed technique for averaging the levels at which pilot signals are received when a propagation loss component contained in the level of a received pilot signal fluctuates relatively rapidly.

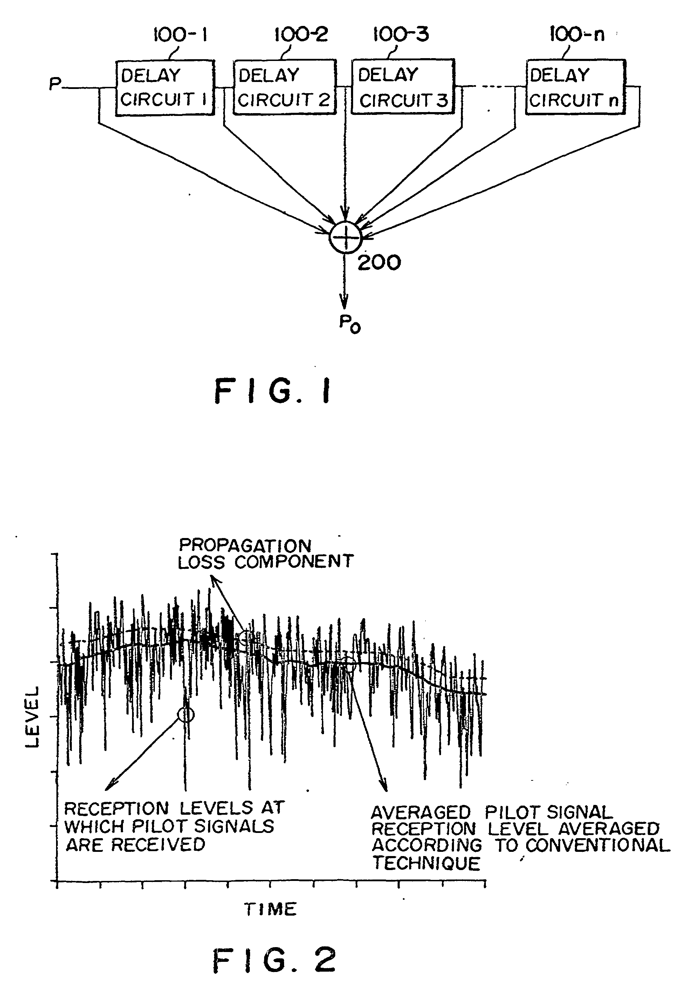

Referring to Fig. 1, a previously proposed averaging technique will now be described. A pilot signal of a reception level P passes through n number of delay circuits 100-1 to 100-n. A summing unit 200 calculates an average of the reception levels at which the n number of past pilot signals are received. The summing unit 200 thus obtains an averaged pilot signal reception level P₀.

Fig. 2 is a graphical representation of the above-described averaging operation of Fig. 1. At the start of the operation, the levels at which the pilot signals were received suffered from level fluctuation with the fading fluctuation component overlapping the propagation loss component. The fading fluctuation component was then limited by means of the averaging. The resultant received level was well in proportion to the propagation loss component.

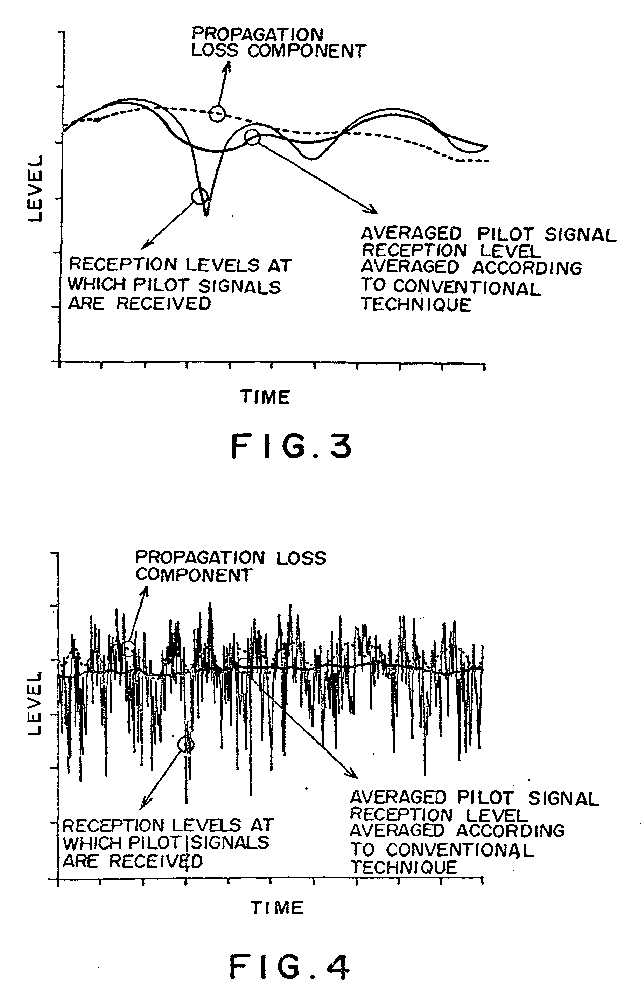

However, referring to Figs. 3 and 4, the fluctuation profile for the level at which the pilot signal was received is shown to have changed depending on various factors including speed of movement and the transmission environment of the mobile station. Accordingly, a situation has arisen in which the correct propagation loss component cannot be established, even if the received pilot signal is averaged constantly. For example, the reception level for the pilot signal that is averaged with a conventional averaging technique is not significantly different from the reception level before averaging with a relatively sluggish fading fluctuation profile. On the contrary, rapid fluctuation of the propagation loss results in excessive averaging, which causes averaging of the propagation loss fluctuation as well.

As it appears from the above description, the previously proposed technique cannot provide a precise and correct acquisition of the propagation loss component from the level of a received pilot signal. This is liable to cause an incorrect choice of the base station by the mobile station and undesirable increase in errors in the control of the transmission power. The problem is particularly significant in code division multiple access cellular mobile radio communication systems, because the incorrect choice of a base station with a minimum propagation loss results in interference to other radio channels, decreasing the total number of mobile stations that the communication system can handle.

A feature of an arrangement to be described below, by way of example, in illustration of the present invention is the provision of a received pilot signal level averaging system for averaging the levels at which pilot signals are received employing means for the more precise acquisition of a propagation loss component.

In a pilot signal level averaging system for averaging the levels at which pilot signals are received, which is to be described below by way of example in illustration of the present invention, the pass band characteristics of a variable filter are controlled on the basis of an expected occupied bandwidth of a propagation loss fluctuation obtained in a propagation loss bandwidth fluctuation reception unit.

In a particular arrangement to be described below by way of example in illustration of the present invention, a cellular mobile radio communication system includes base stations that send pilot signals all the time and a mobile station which has a device for use in determining the level at which the transmitted pilot signal is received as a pilot signal reception level. The base station has a propagation environment parameter determining unit for determining a propagation environment parameter, and a transmission unit for transmitting the propagation environment parameter to the mobile station. The mobile station has a reception unit for receiving the propagation environment parameter, a pilot signal reception level fluctuation rate detection unit for detecting the fluctuation rate of the level of a received pilot signal, a propagation loss fluctuation bandwidth prediction unit for predicting the bandwidth fluctuation for a propagation loss component included in the pilot signal reception level, and an averaging filter that can modify the pass band characteristics. The mobile station predicts, as a predicted bandwidth fluctuation, the bandwidth fluctuation for the propagation loss component included in the pilot signal reception level, based on the propagation environment parameter and the fluctuation rate of the pilot signal reception level received by the reception unit. The mobile station determines the pass band characteristics of the averaging filter according to the predicted bandwidth fluctuation. The pilot signal passes through the averaging filter with the determined pass band characteristics. As a result, only the propagation loss component is acquired.

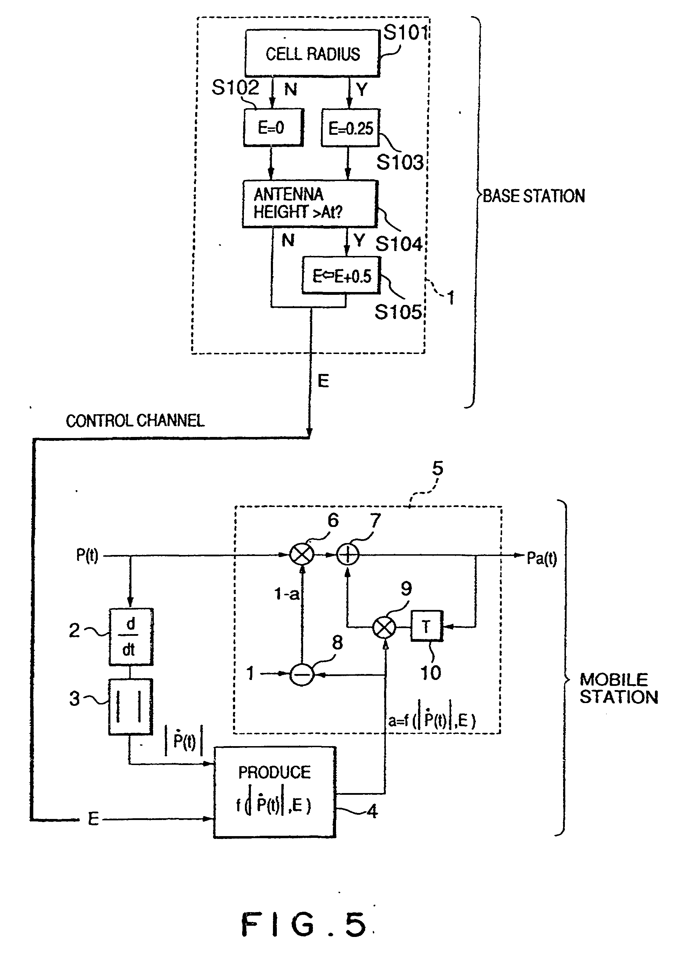

The following description and Figs. 5 to 13 of the accompanying drawings disclose, by means of examples, the invention which is characterised in the appended claims, whose terms define the extent of the protection conferred hereby.

In the drawings:-
Fig. 5 is a block schematic diagram for use in describing the configuration of an averaging system for averaging the levels at which pilot signals are received,

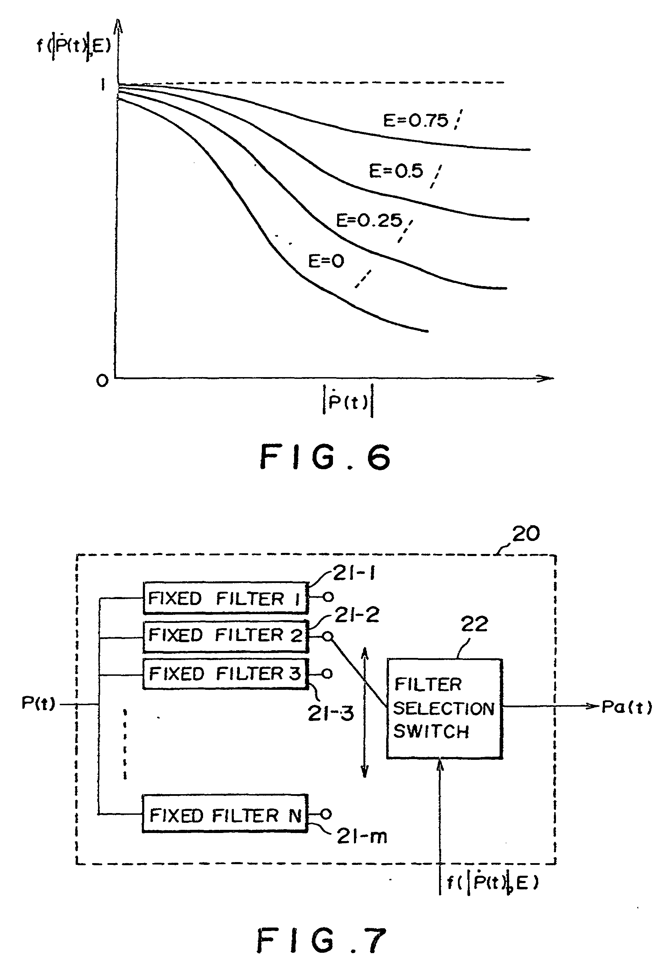

Fig. 6 is a graphical representation for use in describing an example of a propagation loss fluctuation bandwidth evaluation function,
Fig. 7 is a block schematic diagram showing a second example of an averaging filter,

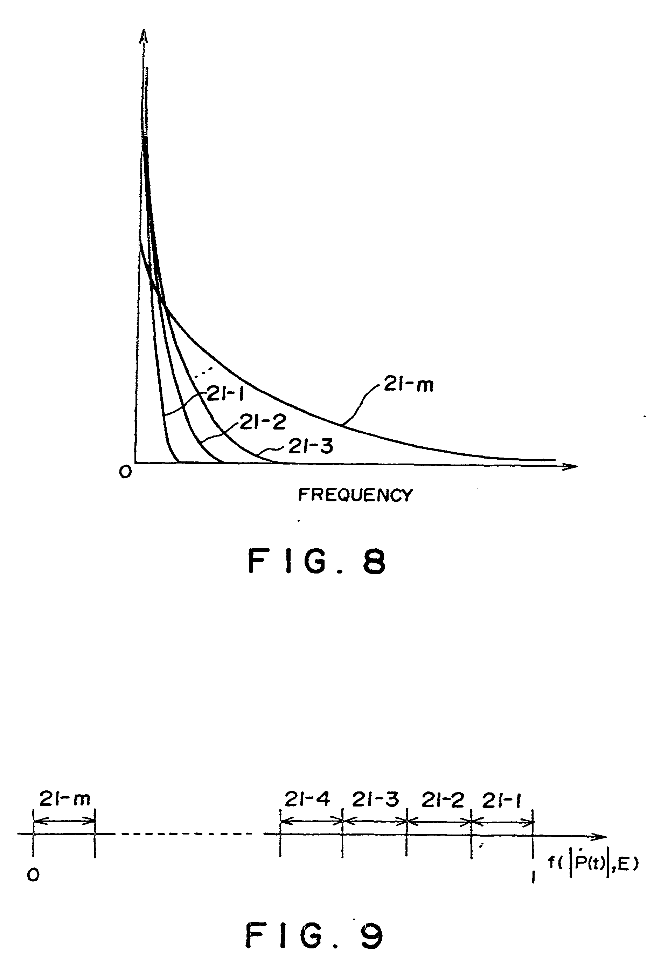

Fig. 8 is a graphical representation showing the frequency characteristics of fixed filters,
Fig. 9 is a diagrammatic illustration exemplifying the relation between a propagation loss fluctuation bandwidth evaluation function, and a fixed filter,

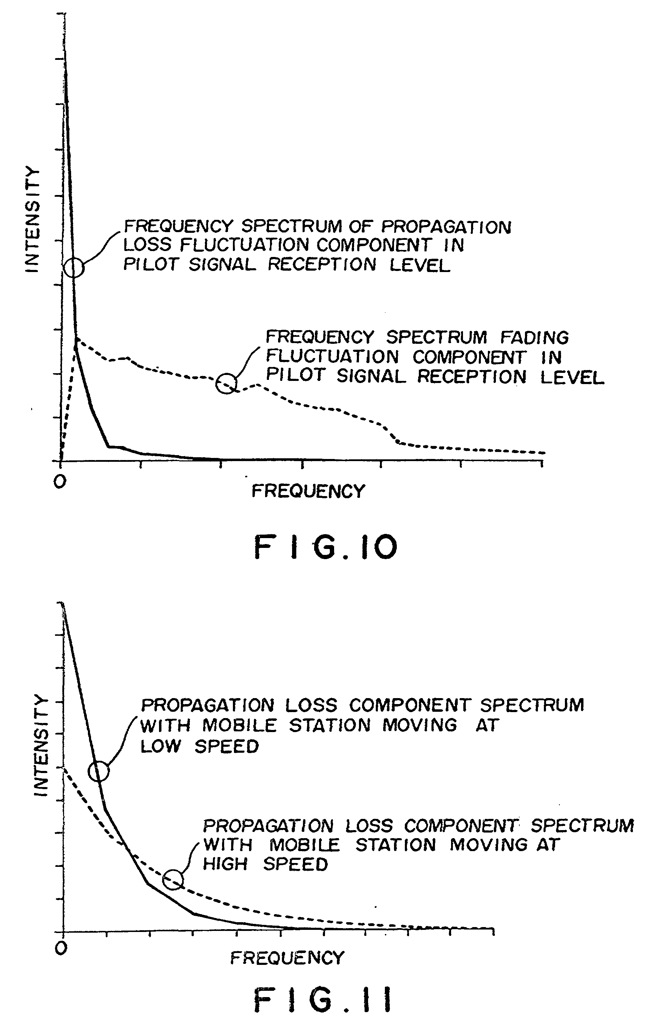

Fig 10 shows the frequency spectrum of a propagation loss fluctuation component and a fading fluctuation component included in the level of a received pilot signal,

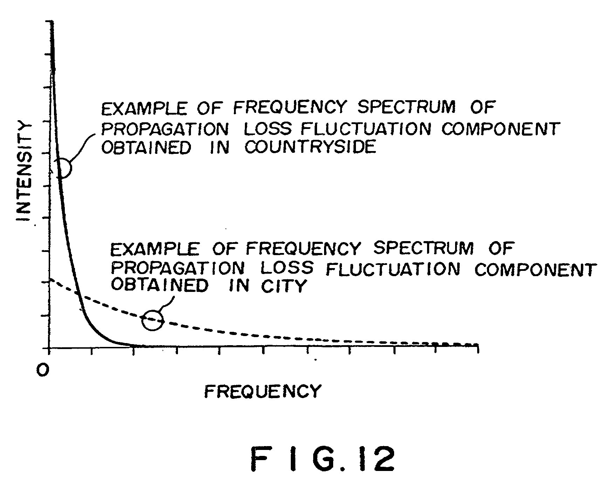

Fig. 11 shows the difference in the frequency spectra between propagation loss fluctuation components included in pilot signal reception levels for mobile stations moving at a low speed and at a high speed,
Fig. 12 shows the difference in the frequency spectra between the propagation loss fluctuation components included in the pilot signal reception levels for mobile stations in a city and in the countryside, and

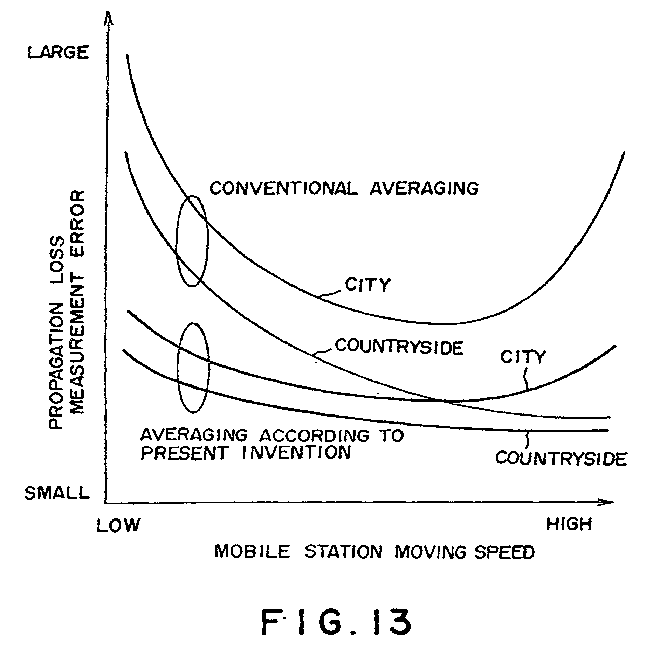

Fig. 13 is a graphical representation of a propagation loss measurement error as a function of the speed of a mobile station.

As mentioned above, a cellular mobile radio communication system includes a number of scattered radio base stations. The base stations use frequencies in the same range at the same time. A mobile station in previously proposed systems establishes connection with the one of the base stations providing the minimum propagation loss. The mobile station establishes communication with the base station using the minimum transmission power by means of transmission power control. The transmission power control minimizes interference to any other radio channels and thus an increased number of mobile stations can access the particular base station simultaneously. The base stations transmit pilot signals to the mobile stations all the time. A mobile station estimates the propagation loss from the received pilot signal. The pilot signal serves as an index for the transmission power control or for the choice of the base station that the mobile station accesses.

The level at which the mobile station receives the pilot signals has a fading fluctuation component that fluctuates rapidly into a propagation loss fluctuation component with a sluggish fluctuation profile. The reception level for the pilot signal with an overlapped fading fluctuation component increases the possibility of an error in the transmission power control when the mobile station performs the transmission power control or chooses the base station. Such an error may cause an improper choice of the base station with the minimum propagation loss for the mobile station in question. Therefore, the propagation loss component is acquired by means of averaging the levels at which the pilot signals are received.

In a previously proposed technique for averaging the levels at which the pilot signals are received, the levels at which the pilot signals are received suffers from level fluctuation, with the fading fluctuation component overlapping the propagation loss component. The fading fluctuation component is then limited by means of the averaging. The resultant reception level is well in proportion to the propagation loss component

However, the fluctuation profile for the level at which the pilot signal is received changes depending on various factors including the speed of movement and the transmission environment of the mobile station. This means that certain constant averaging of the pilot signals which are received does not always enable correct establishment of the propagation loss component to be made. For example, the reception level of pilot signals that are averaged with a conventional averaging technique is not significantly different from the reception level before averaging, with a relatively sluggish fading fluctuation profile. On the contrary, rapid fluctuation of the propagation loss results in excessive averaging, which causes averaging of the propagation loss fluctuation as well.

Thus, previously described Fig. 3 is a graphical representation showing level fluctuation resulting from the same averaging process, except that the fluctuation of the fading component is more sluggish than that shown in Fig. 2. The averaged pilot signal reception level is little different from the levels at which the pilot signals are received before averaging. The degree of averaging is thus considered to be insufficient.

On the other hand, previously described Fig. 4 is a graphical representation showing the fluctuation of the level obtained as a result of the same averaging process, except that the fading component is fluctuated at a faster rate than in Fig. 2. As is apparent from Fig. 4, excessive averaging causes averaging of the propagation loss fluctuation as well. Thus, the previously proposed technique cannot provide a precise and correct establishment of the propagation loss component from the pilot signal reception level. This may cause and incorrect choice of the base station by the mobile station and an undesirable increase in error of the transmission power control. The problem is particularly significant in a code division multiple access cellular mobile radio communication system, because an incorrect choice of the base station with the minimum propagation loss results in interference with other radio channels, decreasing the total number of mobile stations which the communication system can handle.

Referring to Fig. 5, there is shown a base station which includes a propagation environment parameter determining unit 1. A mobile station includes a differentiator 2, an absolute value circuit 3, a propagation loss fluctuation bandwidth predicting unit 4, and an averaging filter unit 5. The averaging filter unit 5 receives pilot signal reception levels P(t) and takes an average of the levels. The averaging filter unit 5 then produces an output Pa(t). The averaging filter unit 5 includes a primary feedback filter. The primary feedback filter changes its pass band characteristics with a feedback coefficient "a" described below. A multiplier 9 multiplies the feedback coefficient "a" with a value of the averaged output Pa(t) before a delay amount T. On the other hand, a subtraction product output of a subtracter 8 becomes (1 - a). A multiplier 6 multiplies the subtraction product output (1 - a) with the pilot signal reception level P(t). An adder 7 adds the output of the multiplier 6 to the output of the multiplier 9 to produce the averaged received pilot signal level Pa(t). The feedback coefficient "a" is defined in the range of 0 < a < 1. The smaller is the value of the coefficient, the narrower is the pass band of the averaging filter unit 5.

The pilot signal reception level P(t) is supplied to the differentiating circuit 2. The differentiating circuit 2 differentiates the pilot signal reception level P(t) and produces a differentiation value. The absolute value circuit 3 calculates an absolute value |P(t)'| of the above-mentioned differentiation value, that is, a fluctuation rate of the pilot signal reception level. The propagation loss fluctuation bandwidth predicting unit 4 supplied with the absolute value |P(t)'| of the differentiation value and a propagation environment parameter E notified by the base station via a control channel. The propagation loss fluctuation bandwidth predicting unit 4 predicts a propagation loss fluctuation bandwidth and controls the pass band characteristics of the averaging filter 5 according to the prediction result. In the illustrated drawings, dots above the pilot signal reception levels P(t) indicate differential value. This is also true in the following description.

A method of determining the propagation environment parameter E is described now. The propagation environment parameter E is determined in the propagation environment parameter determining unit 1 in the base station. The value of the propagation environment parameter E is defined in the range between 0 and 1, both exclusive. This definition indicates that the smaller the value of the propagation environment parameter E is, the faster the propagation loss component fluctuates. Each base station is previously supplied with information about the radius of a cell and the height of an antenna. The base station determines whether the radius of the cell is larger than a threshold value Cr for the radius of the cell (hereinafter, referred to as a cell radius threshold value Cr) (Step S101). If the radius of the cell is equal to or smaller than the cell radius threshold value Cr, then the propagation environment parameter E is determined as zero (Step S102). If the radius of the cell is larger than the cell radius threshold value Cr, then the propagation environment parameter E is determined as 0.25 (Step S103). Next, the base station determines whether the height of the antenna is larger than a threshold value At for the antenna height (hereinafter, referred to as an antenna height threshold value At) (Step S104). If the height of the antenna is larger than the antenna height threshold value At, then 0.5 is added to the value of the propagation environment parameter E (Step S105). The above procedure results in a larger propagation environment parameter E with the larger radius of the cell and antenna height. This means that the value of the propagation environment parameter E becomes larger with the more sluggish fluctuation of the propagation loss.

The propagation loss fluctuation bandwidth prediction unit 4 determines the feedback coefficient "a" according to the fluctuation rate |P(t)'| of the pilot signal reception levels and the propagation environment parameter E. The feedback coefficient "a" is given by a propagation loss fluctuation bandwidth evaluation function f with the fluctuation rate |P(t)'| of the pilot signal reception levels and the propagation environment parameter E which are used as arguments of the function. In this event, a value of the propagation loss fluctuation bandwidth evaluation function is given between 0 and 1.

Fig. 6 shows an example of the function f. The propagation loss fluctuation bandwidth evaluation function f is determined such that the value of the function f (|P(t)'|,E) becomes smaller with the higher fluctuation rate |P(t)'| of the pilot signal reception levels and with the smaller propagation environment parameter E. Accordingly, expansion of the pass band of the averaging filter unit 5 allows more precise acquisition of the propagation loss component when the mobile station moves fast, or when the propagation loss is expected to fluctuate rapidly.

Next, another example of the averaging filter unit is described with reference to Fig. 7. As shown in Fig. 7, an averaging filter 20 includes fixed filters 21-1 to 21-m having different fixed pass band characteristics and a filter selection switch 22 for selecting one of the fixed filters.

Fig. 8 shows frequency characteristics of a group of filters formed of the fixed filters 21-1 to 21-m. As shown in Fig. 8, the filter bearing the smaller number has the narrower pass band. The filter selection switch 22 chooses one of the fixed filters based on the output of the propagation loss fluctuation bandwidth evaluation function f.

Referring to Fig. 9, an example of a technique for selecting the fixed filter is described. The fixed filter having the broader pass band is selected with the smaller output of the propagation loss fluctuation bandwidth evaluation function f, that is, with the broader propagation loss fluctuation bandwidth.

Fig. 10 shows the frequency spectra of a propagation loss fluctuation component and a fading fluctuation component included in the received pilot signal level. As shown in Fig. 10, the bandwidth in which the propagation loss fluctuates is smaller than the bandwidth in which the fading fluctuates. The fluctuation of the propagation loss component is more sluggish than that of the fading component. Therefore, only the propagation loss fluctuation component can be acquired by means of passing the spectra through the narrow-band pass filter. The rate of the propagation loss fluctuation is higher than the moving speed of the mobile station.

Fig. 11 shows a difference in frequency spectra between the propagation loss fluctuation components included in the pilot signal reception levels for mobile stations moving at a low speed and a high speed. The propagation loss fluctuates in a wider range of the bandwidth when the mobile station moves fast. The spectrum band in which the propagation loss fluctuates depends on the environment of the mobile station. In general, the radio wave propagation path approaches the ground surface when the antenna is low and the cell radius is small in an area crowded with buildings. An area crowded with buildings includes many obstacles that block the radio wave. Therefore, propagation over a short distance results in a significant difference in the propagation loss, with a broad propagation loss fluctuation bandwidth.

Fig. 12 shows a difference in frequency spectra between the propagation loss fluctuation components included in the pilot signal reception levels for the mobile station in a city and in the countryside, in which the mobile station moves at a predetermined speed. The propagation loss fluctuation bandwidth is relatively broad. Therefore, the system for averaging the levels at which the pilot signals are received in the arrangement being described predicts the propagation loss fluctuation bandwidth by means of the propagation loss fluctuation bandwidth predicting unit 4. The system then chooses and uses the proper variable filter depending on the prediction result. This makes it possible to establish the propagation loss component precisely and independently of the moving speed of the mobile station and the propagation environment.

Fig. 13 is a graphical representation of propagation loss measurement errors as a function of the speed of a mobile station in a city and in the countryside, after the averaging of the levels at which the pilot signals are received, using a previously proposed technique and a technique described herein. In both cases, the propagation loss measurement errors are larger in the city with the larger propagation loss fluctuation than in the countryside. The system described in illustration of the present invention reduces the difference in the propagation loss measurement error due to the difference in the moving speed of the mobile station, as compared to the case using a previously proposed technique. In particular, the propagation loss measurement error is improved significantly as compared to the case employing the previously proposed technique when the mobile station moves relatively slowly. Such a remarkable improvement results from the proper choice of the variable filter based on the fluctuation rate of the pilot signal reception levels. In addition, the proper averaging filter is selected according to the prediction result depending on the propagation environment. Therefore, the system of the arrangements described herein in illustration of the present invention achieves a smaller difference in propagation loss measurement errors between the city and the countryside than that obtained by using the previously proposed technique.

As described above, in the arrangements that have been described in illustration of the present invention, only the propagation loss can be determined precisely by means of the proper choice of the filter depending on the fluctuation rate of the pilot signal reception levels and the radio wave propagation environment. As a result, the reliability of the entire system is improved with the reduced transmission power control error and the proper and correct choice of the base station.

It will be understood that, although particular arrangements have been described, by way of example, in illustration of the invention, variations and modifications thereof, as well as other arrangements, may be conceived within the scope of the appended claims.

## Claims

1. A system for averaging the levels at which pilot signals are received in a cellular mobile radio communication system including base stations being adapted to send pilot signals, and a mobile station having a device for use in determining the level at which a transmitted pilot signal is received as a pilot signal reception level, in which the base station includes propagation environment parameter determining means (1) for determining a propagation environment parameter (E), and means for transmitting the propagation environment parameter (E) to the mobile station, in which the mobile station includes means for receiving the propagation environment parameter (E), pilot signal reception level fluctuation rate detection means (3) for detecting the fluctuation rate of the pilot signal reception level, propagation loss fluctuation bandwidth prediction means (4) for predicting, as a predicted fluctuation bandwidth, the fluctuation bandwidth for the propagation loss component included in the pilot signal reception level, based on the propagation environment parameter (E) and the fluctuation rate of the pilot signal reception level received by the means for receiving the propagation environment parameter (E), and an averaging filter (5) having a pass band characteristics, the mobile station being adapted to change the pass band characteristics of the averaging filter (5) according to the predicted fluctuation bandwidth, and to pass the pilot signal through the averaging filter (5) with the modified pass band characteristics to extract only the propagation loss component.

2. A system for averaging the level at which pilot signals are received as claimed in claim 1, wherein the propagation environment parameter determining means (1) determines whether the radius of the cell for the base station is larger than a predetermined cell radius threshold value, and reflects the degree of the fluctuation rate to the propagation environment parameter (E) upon the assumption that a smaller cell radius results in a faster fluctuation of the propagation loss.

3. A system for averaging the levels at which pilot signals are received as claimed in claim 2, in which the propagation environment parameter (E) is set to zero when the radius of the cell is equal to or smaller than the predetermined cell radius threshold value, the propagation environment parameter (E) is set to a value larger than zero when the radius of the cell is larger than the predetermined cell radius threshold value, and the propagation environment parameter (E) is set so that the value of the propagation environment parameter (E) becomes larger with a slower fluctuation of the propagation loss.

4. A system for averaging the levels at which pilot signals are received as claimed in claim 1, in which the propagation environment parameter determining means (1) determines whether the height of an antenna in the base station is larger than a predetermined antenna height threshold value, and reflects the degree of the fluctuation rate to the propagation environment parameter (B) upon the assumption that a lower antenna height results in a faster fluctuation of the propagation loss.

5. A system for averaging the levels at which pilot signals are received as claimed in claim 4, wherein the propagation environment parameter is set to a value larger than zero when the height of the antenna is larger than the predetermined antenna height threshold value and wherein the propagation environment parameter (E) is set so that the value of the parameter becomes larger with a slower fluctuation of the propagation loss.

6. A system for averaging the levels at which pilot signals are received as claimed in claim 1, wherein the base station reflects the degree of the fluctuation rate to the propagation environment parameter (E) upon the assumption that a lower antenna in the base station results in a faster fluctuation of the propagation loss and that a smaller radius of the cell for said base station results in a faster fluctuation of the propagation loss.

7. A system for averaging the levels at which pilot signals are received as claimed in claim 1, wherein the averaging filter (5) is a primary feedback filter that changes its pass band characteristics by using a feedback coefficient (a) determined on the basis of the fluctuation rate of the pilot signal reception level and the propagation environment parameter (E).

8. A system for averaging the levels at which pilot signals are received as claimed in claim 1, wherein the averaging filter (5) includes a plurality of fixed pass band filters (21-1 to 21-m) each having different pass bands, and a filter selection switch (22), and the averaging filter changes its pass band characteristics by means of choosing one of the plurality of fixed pass band filters (21-1 to 21-m) by using a feedback coefficient (a) determined on the basis of the fluctuation rate of the pilot signal reception level and the propagation environment parameter (E).

9. A system for averaging the levels at which pilot signals are received as claimed in claim 1, wherein the propagation loss fluctuation bandwidth prediction means controls the pass band characteristics of the averaging filter to be broader the faster is the fluctuation rate of the pilot signal reception level and the faster is the propagation loss fluctuation rate indicated by the propagation environment parameter (E).

## Patentansprüche

1. System zur Durchschnittsbildung der Pegel, mit welchen Pilotsignale in einem zellulären Mobilfunk-Kommunikationssystem empfangen werden, welches Basisstationen, die eingerichtet sind, um Pilotsignale auszusenden, und eine mobile Station aufweist, die eine Vorrichtung hat, die verwendbar ist, um den Pegel, mit welchem ein gesendetes Pilotsignal empfangen wird, als den Pilotsignal-Empfangspegel zu ermitteln,
wobei die Basisstation aufweist:
eine Einrichtung (1) zum Ermitteln eines Ausbreitungsumgebungsparameters (E); und
eine Einrichtung zum Übertragen des Ausbreitungsumgebungsparameters (E) an die Mobilstation;
wobei die Mobilstation aufweist:
eine Einrichtung zum Empfangen des Ausbreitungsumgebungsparameters (E),
eine Einrichtung (3) zum Erfassen der Fluktuationsrate des Pilotsignal-Empfangspegels,
eine Einrichtung (4) zur Vorhersage einer Fluktuationsbandbreite eines Ausbreitungsverlusts, um auf der Basis des Ausbreitungsumgebungsparameters (E) und der Fluktuationsrate des Pilotsignal-Empfangspegels, der von der Einrichtung zum Empfangen des Ausbreitungsumgebungsparameters (E) empfangen wird, die Fluktuationsbandbreite für die im Pilotsignal-Empfangspegel enthaltene Ausbreitungsverlustkomponente als vorhergesagte Fluktuationsbandbreite vorherzusagen, und
ein Durchschnittsbildungsfilter (5) mit Bandpaßeigenschaften,
wobei die Mobilstation eingerichtet ist, um die Bandpaßeigenschaften des Durchschnittsbildungsfilters (5) gemäß der vorhergesagten Fluktuationsbreite zu ändern und das Pilotsignal durch das Durchschnittsbildungsfilter (5) mit dem abgeänderten Bandpaßeigenschaften hindurch zu lassen, um nur die Ausbreitungsverlustkomponente zu extrahieren.

2. System zur Durchschnittsbildung der Pegel, mit welchen Pilotsignale empfangen werden, nach Anspruch 1, wobei die Einrichtung (1) zum Ermitteln eines Ausbreitungsumgebungsparameters ermittelt, ob der Radius der Zelle für die Basisstation größer ist als ein vorgegebener Zellenradius-Schwellenwert, und das Verhältnis der Fluktuationsrate zum Ausbreitungsumgebungsparameter (E) unter der Annahme betrachtet, daß ein kleinerer Zellenradius eine schnellere Fluktuation des Ausbreitungsverlusts zur Folge hat.

3. System zur Durchschnittsbildung der Pegel, mit welchen Pilotsignale empfangen werden, nach Anspruch 2, wobei der Ausbreitungsumgebungsparameter (E) auf Null gesetzt wird, wenn der Zellenradius gleich oder kleiner ist als der vorgegebene Zellenradius-Schwellenwert, der Ausbreitungsumgebungsparameter (E) auf einen Wert größer als Null gesetzt wird, wenn der Zellenradius größer ist als der vorgegebene Zellenradius-Schwellenwert, und der Ausbreitungsumgebungsparameter (E) so gesetzt wird, daß der Wert des Ausbreitungsumgebungsparameters (E) mit einer langsameren Fluktuation des Ausbreitungsverlusts größer wird.

4. System zur Durchschnittsbildung der Pegel, mit welchen Pilotsignale empfangen werden, nach Anspruch 1, wobei die Einrichtung (1) zum Ermitteln eines Ausbreitungsumgebungsparameters ermittelt, ob die Höhe einer Antenne in der Basisstation größer ist als ein vorgegebener Antennenhöhe-Schwellenwert, und das Verhältnis der Fluktuationsrate zum Ausbreitungsumgebungsparameter (E) unter der Annahme betrachtet, daß eine niedrigere Antennenhöhe eine schnellere Fluktuation des Ausbreitungsverlusts zur Folge hat.

5. System zur Durchschnittsbildung der Pegel, mit welchen Pilotsignale empfangen werden, nach Anspruch 4, wobei der Ausbreitungsumgebungsparameter auf einen Wert größer als Null gesetzt wird, wenn die Höhe der Antenne größer ist als der vorgegebene Antennenhöhe-Schwellenwert, und wobei der Ausbreitungsumgebungsparameter (E) so gesetzt wird, daß der Wert des Parameters mit einer langsameren Fluktuation des Ausbreitungsverlusts größer wird.

6. System zur Durchschnittsbildung der Pegel, mit welchen Pilotsignale empfangen werden, nach Anspruch 1, wobei die Basisstation das Verhältnis der Fluktuationsrate zum Ausbreitungsumgebungsparameter (E) unter der Annahme betrachtet, daß eine niedrigere Antenne in der Basisstation eine schnellere Fluktuation des Ausbreitungsverlusts zur Folge hat und daß ein kleinerer Zellenradius der betreffenden Basisstation eine schnellere Fluktuation des Ausbreitungsverlusts zur Folge hat.

7. System zur Durchschnittsbildung der Pegel, mit welchen Pilotsignale empfangen werden, nach Anspruch 1, wobei das Durchschnittsbildungsfilter (5) ein primäres Rückkopplungsfilter ist, das seine Bandpaßeigenschaften unter Verwendung eines Rückkopplungskoeffizienten (a) ändert, der auf der Basis der Fluktuationsrate des Pilotsignal-Empfangspegels und des Ausbreitungsumgebungsparameters (E) ermittelt wird.

8. System zur Durchschnittsbildung der Pegel, mit welchen Pilotsignale empfangen werden, nach Anspruch 1, wobei das Durchschnittsbildungsfilter (5) mehrere feste Bandpaßfilter (12-1 bis 21-m) mit jeweils unterschiedlichen Durchlaßbändern und einen Filterauswahlschalter (22) aufweist, und wobei das Durchschnittsbildungsfilter seine Bandpaßeigenschaften dadurch ändert, daß eines der mehreren festen Bandpaßfilter (21-1 bis 21-m) unter Verwendung eines Rückkopplungskoeffizienten (a) ausgewählt wird, der auf der Basis der Fluktuationsrate des Pilotsignal-Empfangspegels und des Ausbreitungsumgebungsparameters (E) ermittelt wird.

9. System zur Durchschnittsbildung der Pegel, mit welchen Pilotsignale empfangen werden, nach Anspruch 1, wobei die Einrichtung zur Vorhersage der Fluktuationsbandbreite des Ausbreitungsverlusts das Durchlaßband des Durchschnittsbildungsfilters steuert, so daß es breiter wird, je schneller die Fluktuationsrate des Pilotsignal-Empfangspegels ist und je schneller die Fluktuationsrate des Ausbreitungsverlusts ist, die von dem Ausbreitungsumgebungsparameter (E) angegeben wird.

## Revendications

1. Système destiné à mettre en moyenne les niveaux auxquels des ondes pilote sont reçues dans un système de radiocommunication mobile cellulaire incluant des stations de base qui sont adaptées pour envoyer des ondes pilote, et une station mobile ayant un dispositif à utiliser pour déterminer le niveau auquel une onde pilote transmise est reçue en tant que niveau de réception d'onde pilote, dans lequel la station de base inclut des moyens de détermination de paramètre d'environnement de propagation (1) pour déterminer un paramètre d'environnement de propagation (E), et des moyens pour transmettre le paramètre d'environnement de propagation (E) à la station mobile, dans lequel la station mobile inclut des moyens pour recevoir le paramètre d'environnement de propagation (E), des moyens de détection de vitesse de fluctuation du niveau de réception d'onde pilote (3) pour détecter la vitesse de fluctuation du niveau de réception d'onde pilote, des moyens de prédiction de largeur de bande de fluctuation d'affaiblissement de propagation (4) pour prévoir, en tant que largeur de bande de fluctuation prévue, la largeur de bande de fluctuation pour la composante d'affaiblissement de propagation incluse dans le niveau de réception d'onde pilote, sur la base du paramètre d'environnement de propagation (E) et de la vitesse de fluctuation du niveau de réception d'onde pilote reçue par l'intermédiaire des moyens destinés à recevoir le paramètre d'environnement de propagation (E), et un filtre de mise en moyenne (5) ayant des caractéristiques de bande passante, la station mobile étant adaptée pour changer les caractéristiques de bande passante du filtre de mise en moyenne (5) conformément à là largeur conformément à la largeur de bande de fluctuation prévue, et pour passer l'onde pilote à travers le filtre de mise en moyenne (5) ayant les caractéristiques de bande passante modifiées afin d'extraire uniquement la composante d'affaiblissement de propagation.

2. Système destiné à mettre en moyenne les niveaux auxquels des ondes pilote sont reçues selon la revendication 1, dans lequel les moyens de détermination de paramètre d'environnement de propagation (1) déterminent si le rayon de la cellule pour la station de base est supérieur à une valeur de seuil de rayon de cellule prédéterminée, et répercutent le degré de la vitesse de fluctuation dans le paramètre d'environnement de propagation (E) en se basant sur l'hypothèse qu'un rayon de cellule plus petit donne en résultat une fluctuation plus rapide de l'affaiblissement de propagation.

3. Système destiné à mettre en moyenne les niveaux auxquels des ondes pilote sont reçues selon la revendication 2, dans lequel le paramètre d'environnement de propagation (E) est établi à zéro lorsque le rayon de la cellule est égal ou inférieur à la valeur de seuil de rayon de cellule prédéterminée, le paramètre d'environnement de propagation (E) est établi à une valeur supérieure à zéro lorsque le rayon de la cellule est supérieur à la valeur de seuil de rayon de cellule prédéterminée, et le paramètre d'environnement de propagation (E) est établi de sorte que la valeur du paramètre d'environnement de propagation (E) devient plus grande du fait d'une fluctuation plus lente de l'affaiblissement de propagation.

4. Système destiné à mettre en moyenne les niveaux auxquels des ondes pilote sont reçues selon la revendication 1, dans lequel les moyens de détermination de paramètre d'environnement de propagation (1) déterminent si la hauteur d'une antenne dans la station de base est supérieure à une valeur de seuil de hauteur d'antenne prédéterminée, et répercutent le degré de la vitesse de fluctuation dans le paramètre d'environnement de propagation (B) en se basant sur l'hypothèse qu'une hauteur d'antenne plus petite donne en résultat une fluctuation plus rapide de l'affaiblissement de propagation.

5. Système destiné à mettre en moyenne les niveaux auxquels des ondes pilote sont reçues selon la revendication 4, dans lequel le paramètre d'environnement de propagation est établi à une valeur supérieure à zéro lorsque la hauteur de l'antenne est supérieure à la valeur de seuil de hauteur d'antenne prédéterminée et dans lequel le paramètre d'environnement de propagation (E) est établi de sorte que la valeur du paramètre devient plus grande du fait d'une fluctuation plus lente de l'affaiblissement de propagation.

6. Système destiné à mettre en moyenne les niveaux auxquels des ondes pilote sont reçues selon la revendication 1, dans lequel la station de base répercute le degré de la vitesse de fluctuation dans le paramètre d'environnement de propagation (E) en se basant sur l'hypothèse qu'une antenne plus petite dans la station de base donne en résultat une fluctuation plus rapide de l'affaiblissement de propagation et qu'un rayon plus petit de la cellule pour ladite station de base station de base donne en résultat une fluctuation plus rapide de l'affaiblissement de propagation.

7. Système destiné à mettre en moyenne les niveaux auxquels des ondes pilote sont reçues selon la revendication 1, dans lequel le filtre de mise en moyenne (5) est un filtre de rétroaction principal qui change ses caractéristiques de bande passante en utilisant un coefficient de rétroaction (a) déterminé sur la base de la vitesse de fluctuation du niveau de réception d'onde pilote et du paramètre d'environnement de propagation (E).

8. Système destiné à mettre en moyenne les niveaux auxquels des ondes pilote sont reçues selon la revendication 1, dans lequel le filtre de mise en moyenne (5) inclut une pluralité de filtres à bande passante fixes (21-1 à 21-m) chacun ayant différentes bandes passantes, et un commutateur de sélection de filtre (22), et le filtre de mise en moyenne change ses caractéristiques de bande passante en choisissant l'un des filtres parmi la pluralité de filtres à bande passante fixes (21-1 à 21-m) en utilisant un coefficient de rétroaction (a) déterminé sur la base de la vitesse de fluctuation du niveau de réception d'onde pilote et du paramètre d'environnement de propagation (E).

9. Système destiné à mettre en moyenne les niveaux auxquels des ondes pilote sont reçues selon la revendication 1, dans lequel les moyens de prédiction de largeur de bande de fluctuation d'affaiblissement de propagation amènent les caractéristiques de bande passante du filtre de mise en moyenne à être plus larges plus le taux de fluctuation du niveau de réception d'onde pilote est rapide et plus la vitesse de fluctuation d'affaiblissement de propagation indiquée par le paramètre d'environnement de propagation (E) est rapide.
